# EUROPÄISCHE PATENTSCHRIFT

(11) **EP 3 770 348 B1**
(45) Veröffentlichungstag und Bekanntmachung des Hinweises auf die Patenterteilung: **30.08.2023**
(21) Anmeldenummer: 20187051.6
(22) Anmeldetag: 21.07.2020
(51) Int. Cl.: E03C 1/122, E04C 1/39, F16L 41/08

(54) **MONTAGEBLOCK**
MOUNTING BLOCK
BLOC DE MONTAGE

(30) Priorität: 23.07.2019 AT 506622019
(43) Veröffentlichungstag der Anmeldung: 27.01.2021
(73) Patentinhaber: Jürgen Höflers Profibox GmbH, 2700 Wiener Neustadt (AT)
(72) Erfinder: Höfler, Jürgen, 2700 Wiener Neustadt (AT)
(74) Vertreter: KLIMENT & HENHAPEL

(56) Entgegenhaltungen:
- EP-A1- 0 179 966
- AT-U1- 11 695
- AT-U1- 15 972
- DE-A1- 19 715 651

## Beschreibung

Die Erfindung betrifft einen Montageblock für den Anschluss von Sanitär- oder Heizungsgeräten, umfassend einen aufgeschäumten Formkörper, in welchem zumindest ein Zuleitungsrohr und ein Ableitungsrohr in festgelegten Positionen eingeschäumt sind, gemäß dem Oberbegriff von Anspruch 1.

### STAND DER TECHNIK

Zur einfacheren Installation von Anschlüssen für Sanitär- oder Heizungsgeräte kann sich der Installateur sogenannter Montageblöcke bedienen. Üblicherweise weisen diese Montageblöcke sogenannte Formkörper auf, in welchen Zu- und Ableitungsrohre, Armaturen, Einbauteile oder Anschlussstücke eingeschäumt werden und als vorgefertigtes Sanitärmodul am vorgesehenen Ort in einer Einbauöffnung der Wand eingesetzt oder im Trockenbau an Stehern befestigt werden, wobei der Formkörper die unterschiedlichen Komponenten in relativen Positionen zueinander fixiert.

Die AT 15.972 U1 beschreibt einen gattungsgemäßen Montageblock. In der AT 11 695 U1 wird ein ähnlicher Montageblock beschrieben. Die DE 197 15 651 A1 zeigt eine Vorrichtung zum schall- und wärmedämmenden Anschluss von Sanitärarmaturen. In der EP 0 179 966 A1 werden Maßnahmen zum Ablängen von Schachtfutterrohren beschrieben.

Hierbei ist bei Montageblöcken für den Trockenbau üblicherweise vorgesehen, dass der Formkörper zwischen zwei Stehern eines Wandelementes befestigt wird, wofür seitlich vom Formkörper abstehende Montageschienen, diese sind vorzugsweise als starre Flächenelemente oder aus geringfügig elastischen Werkstoffen ausgebildet, eine Befestigung des Formkörpers an den Stehern des Wandelementes ermöglichen, wobei im Anschluss der eingebaute Formkörper verkleidet bzw. die Vorderfläche des Formkörpers abgedeckt wird. Montageblöcke werden aber auch im Mauerwerksbau verwendet, wo sie in Einstemmöffnungen eines Mauerwerks eingesetzt und danach verputzt werden.

Des Weiteren sind Siphonbögen bekannt, die zum Verbinden von ableitenden Rohren im Sanitärbereich dienen. Hierbei ist in eine in einem zuführenden Bogenabschnitt des Siphonbogens vorgesehene Steckmuffe des Siphonbogens ein ableitendes Rohr einsteckbar, wobei die Gummidichtung für eine Abdichtung der Steckverbindung sorgt. Die Gummidichtung ist in der Regel manschettenförmig mit nach innen abragenden Dichtlippen ausgeführt und kann bereits herstellerseitig in der Steckmuffe angeordnet sein, oder vom Anwender in die Steckmuffe eingesteckt werden. Für Siphonbögen sind unterschiedliche Ausführungen bekannt, die zumeist aus einem Zusammenbau unterschiedlicher Komponenten gebildet werden.

Nach dem Einbau von Siphonbögen in Wandelementen verbleibt die Steckmuffe zwar von außen zugänglich, um ein Rohr anschließen zu können, die Anschlussstelle selbst befindet sich aber zumeist hinter der vordersten Wandebene. Falls im Anschlussbereich Undichtheiten auftreten, kann es zu Wasseraustritt kommen, der zu Wasserschäden im Bereich des Formkörpers oder der Wand führen kann, und der auch lange unbemerkt bleiben kann.

### AUFGABENSTELLUNG

Die vorliegende Erfindung setzt sich somit zum Ziel, bei Verwendung eines Siphonbogens das Risiko unbemerkter Wasseraustritte im Anschlussbereich sowie ein Wassereintritt in den Wandaufbau zuverlässig zu vermeiden.

### DARSTELLUNG DER ERFINDUNG

Dieses Ziel wird erfindungsgemäß mithilfe eines Montageblocks für den Anschluss von Sanitär- oder Heizungsgeräten, umfassend einen aufgeschäumten Formkörper, in welchem zumindest ein Zuleitungsrohr und ein Ableitungsrohr in festgelegten Positionen eingeschäumt sind, erreicht, wobei erfindungsgemäß vorgeschlagen wird, dass ein Siphonbogen mit einem zuführenden Bogenabschnitt und einem abführenden Bogenabschnitt im Formkörper eingeschäumt ist, wobei der abführende Bogenabschnitt des im Formkörper eingeschäumten Siphonbogens mit dem Ableitungsrohr verbunden ist, und der zuführende Bogenabschnitt mit einer Steckmuffe versehen ist, die einen Ablängabschnitt aufweist, der im Bereich einer Vorderseite des aufgeschäumten Formkörpers angeordnet ist und über die Vorderseite des Formkörpers ragt und durch eine Mehrzahl von in axialer Richtung voneinander beabstandet angeordneten, ringförmigen Einschnürungen im Außenmantel der Steckmuffe bei gleichbleibendem Innendurchmesser der Steckmuffe im Bereich des Ablängabschnittes gebildet wird, wobei der zuführende Bogenabschnitt, der abführende Bogenabschnitt und die Steckmuffe einteilig ausgeführt sind und in die Steckmuffe eine Gummidichtung zur dichten Aufnahme eines ableitenden Rohres einsteckbar ist.

Auf diese Weise kann der Siphonbogen im Zuge des Abdeckens oder Verputzens des Montageblocks nach Bedarf zugeschnitten werden, und zwar so, dass der Anschlussbereich der Steckmuffe weitestgehend bündig etwa mit einer Fliesenoberfläche abschließt, oder geringfügig vor der Oberfläche des Wandaufbaus endet. Die Steckmuffe wird hierfür aus einem manuell schneidbaren Kunststoff oder Kunststoffverbund gefertigt sein, beispielsweise aus Polypropylen oder einem mineralstoffverstärkten Polypropylen-Verbundwerkstoff, sodass vor Ort die Steckmuffe mit einem Messer passend zugeschnitten werden kann. Das Zuschneiden wird durch die einteilige Ausführung des zuführenden Bogenabschnittes, des abführenden Bogenabschnittes und der Steckmuffe erleichtert, da der im Montageblock eingeschäumte Siphonbogen entsprechend fixiert wird. Der Zuschnitt wird durch eine Mehrzahl von in axialer Richtung voneinander beabstandet angeordneten, ringförmigen Einschnürungen im Außenmantel der Steckmuffe ermöglicht, die die Wandstärke ausreichend herabsetzen um einen einfachen, manuellen Zuschnitt zu ermöglichen. Bei der Mehrzahl an ringförmigen Einschnürungen handelt es sich etwa um eine Abfolge von Ringnuten, die in axialer Richtung des Ablängabschnittes verteilt angeordnet sind. Im Bereich des Ablängabschnittes weist die Steckmuffe aber trotz der Einschnürungen dennoch einen gleichbleibenden Innendurchmesser auf, um auch nach dem Zuschnitt die Gummidichtung in den Innendurchmesser zuverlässig und formschlüssig einstecken zu können. Der Ablängabschnitt bildet zugleich auch das freie Ende des zuführenden Bogenabschnittes. An seinem anderen Ende geht der vorzugsweise zylindrisch geformte, zuführende Bogenabschnitt über einen formstabilen 90°-Bogen in den zylindrisch geformten, abführenden Bogenabschnitt über. Da sich der Anschlussbereich nun außerhalb des Wandaufbaus befindet, kann ein Wasseraustritt rasch festgestellt werden, wobei ein Eintritt von Wasser in den Wandaufbau unterbunden wird.

Der Ablängabschnitt kann beispielsweise eine Gesamtlänge von 2-5cm aufweisen und 3-10 Einschnürungen umfassen, die in axialer Richtung einen Abstand von 3-6 mm zueinander aufweisen.

### KURZE BESCHREIBUNG DER FIGUREN

Im Folgenden wird die Erfindung unter Bezugnahme auf die beigefügten Figuren anhand eines Ausführungsbeispiels näher beschrieben. Im Detail zeigt:
- Fig. 1: eine Ausführungsform eines Siphonbogen im Rahmen der Erfindung, und die
- Fig. 2: eine Seitenansicht eines erfindungsgemäßen Montageblocks mit einem eingeschäumten Siphonbogen.

### WEGE ZUR AUSFÜHRUNG DER ERFINDUNG

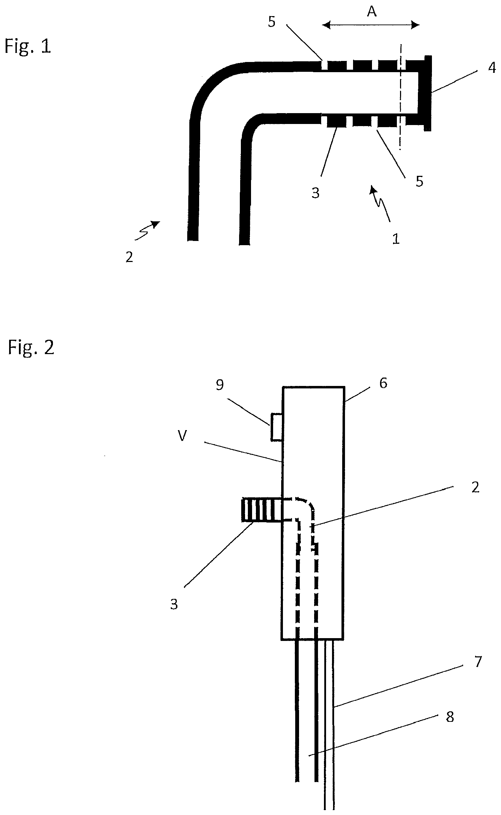

Fig. 1 zeigt einen Siphonbogen im Rahmen der Erfindung mit einem zuführenden Bogenabschnitt 1 und einem abführenden Bogenabschnitt 2, wobei der zuführende Bogenabschnitt 1 mit einer Steckmuffe 3 versehen ist, in die eine Gummidichtung 4 zur dichten Aufnahme eines ableitenden Rohres einsteckbar ist. Die Steckmuffe 3 weist einen Ablängabschnitt A auf, der durch eine Mehrzahl von in axialer Richtung voneinander beabstandet angeordneten, ringförmigen Einschnürungen 5 im Außenmantel der Steckmuffe 3 bei gleichbleibendem Innendurchmesser der Steckmuffe 3 gebildet wird. Die Einschnürungen sind als Ringnuten ausgeführt, wobei im gezeigten Ausführungsbeispiel 4 Einschnürungen 5 vorgesehen sind. Die Steckmuffe ist beispielsweise aus einem manuell schneidbaren Kunststoff oder Kunststoffverbund gefertigt, etwa aus Polypropylen oder einem mineralstoffverstärkten Polypropylen-Verbundwerkstoff, sodass vor Ort die Steckmuffe 3 mit einem Messer passend zugeschnitten werden kann.

Der Zuschnitt wird durch die in axialer Richtung voneinander beabstandet angeordneten, ringförmigen Einschnürungen 5 im Außenmantel der Steckmuffe 3 ermöglicht, die die Wandstärke ausreichend herabsetzen um einen einfachen, manuellen Zuschnitt zu ermöglichen. In der Fig. 1 ist eine mögliche Schnittebene durch eine strichlierte Linie angedeutet. Im Bereich des Ablängabschnittes A weist die Steckmuffe 3 aber trotz der Einschnürungen 5 dennoch einen gleichbleibenden Innendurchmesser auf, um auch nach dem Zuschnitt die Gummidichtung 4 zuverlässig und formschlüssig in den Innendurchmesser einstecken zu können. Auf diese Weise kann der Siphonbogen im Zuge des Abdeckens oder Verputzens nach Bedarf zugeschnitten werden, und zwar so, dass der Anschlussbereich der Steckmuffe 3 weitestgehend bündig etwa mit einer Fliesenoberfläche abschließt, oder die Fliesenoberfläche geringfügig überragt, damit austretendes Wasser im Zuge von Undichtheiten nicht in die Wand läuft. Da sich der Anschlussbereich nun außerhalb des Wandaufbaus befindet, kann ein Wasseraustritt rasch festgestellt werden, wobei ein Eintritt von Wasser in den Formblock oder in den Wandaufbau unterbunden wird.

Fig. 2 zeigt die Seitenansicht eines erfindungsgemäßen Montageblocks mit einem eingeschäumten Siphonbogen, der im Wesentlichen einen aufgeschäumten Formkörper 6 umfasst, in den Zuleitungsrohre 7 und/oder Ableitungsrohre 8 eingeschäumt sind, wobei nur der innere Verlauf eines Ableitungsrohres 8 gezeigt ist und der innere Verlauf des Zuleitungsrohres 7 innerhalb des Formkörpers 6 nicht dargestellt ist. Des Weiteren sind im Bereich der Vorderseite V angeordnete Anschlussstücke 9 für die Zuleitungsrohre 7 ersichtlich, an die ein Sanitär- oder Heizungsgerät angeschlossen werden kann. Ferner ist ein Siphonbogen für den Anschluss eines ableitenden Rohres etwa eines Waschtisches in den Formkörper 6 eingeschäumt, wobei der abführende Bogenabschnitt 2 des Siphonbogens mit dem Ableitungsrohr 8 verbunden ist. Der Ablängabschnitt A der Steckmuffe 3 ist im Bereich einer Vorderseite V des aufgeschäumten Formkörpers 6 angeordnet und ragt über die Vorderseite V des Formkörpers 6.

Im Zuge des Einbaus des gezeigten Montageblocks im Trockenbau wird in der gezeigten Ausführungsform zunächst der Montageblock zwischen zwei Stehern eines Wandelementes befestigt, wofür seitlich vom Formkörper 6 abstehenden Montageschienen an den Stehern des Wandelementes mithilfe eigener Montagezangen befestigt werden. Im Anschluss wird der eingebaute Formkörper 6 verkleidet bzw. die Vorderfläche V des Formkörpers 6 abgedeckt, etwa mit einer Gipskartonplatte, die den Montageblock abdeckt. In weiterer Folge können etwa Wandfliesen verlegt werden.

Nach der Fertigstellung dieses Wandaufbaus kann die Steckmuffe 3 in ihrem Ablängabschnitt A nach Entfernen der Gummidichtung 4 nach Bedarf zugeschnitten werden, wobei die Einschnürungen 5 der Steckmuffe 3 das Ablängen der Steckmuffe 3 entscheidend erleichtern. Die Abschlusskante der jeweiligen Steckmuffe 3 schließt somit im obigen Beispiel mit der Oberfläche der Wandfliesen im Wesentlichen bündig ab, oder überragt sie geringfügig.

Bei einem erfindungsgemäßen Siphonbogen erfolgt schließlich ein letzter Montageschritt, indem die Gummidichtung 4 wieder in das zugeschnittene Ende der Steckmuffe 3 eingesteckt wird. Der Siphonbogen steht nun für den Anschluss eines ableitenden Rohres zur Verfügung, wobei sich der Anschlussbereich aber nun außerhalb des Wandaufbaus befindet, sodass ein Wasseraustritt rasch festgestellt werden kann und ein Eintritt von Wasser in den Formblock oder in den Wandaufbau unterbunden wird.

## Patentansprüche

1. Montageblock für den Anschluss von Sanitär- oder Heizungsgeräten, umfassend einen aufgeschäumten Formkörper (6), in welchem zumindest ein Zuleitungsrohr (7) und ein Ableitungsrohr (8) in festgelegten Positionen eingeschäumt sind, **dadurch gekennzeichnet, dass** ein Siphonbogen mit einem zuführenden Bogenabschnitt (1) und einem abführenden Bogenabschnitt (2) im Formkörper (6) eingeschäumt ist, wobei der abführende Bogenabschnitt (2) des im Formkörper (6) eingeschäumten Siphonbogens mit dem Ableitungsrohr (8) verbunden ist, und der zuführende Bogenabschnitt (1) mit einer Steckmuffe (3) versehen ist, die einen Ablängabschnitt (A) aufweist, der im Bereich einer Vorderseite (V) des aufgeschäumten Formkörpers (6) angeordnet ist und über die Vorderseite (V) des Formkörpers (6) ragt und durch eine Mehrzahl von in axialer Richtung voneinander beabstandet angeordneten, ringförmigen Einschnürungen (5) im Außenmantel der Steckmuffe (3) bei gleichbleibendem Innendurchmesser der Steckmuffe (3) im Bereich des Ablängabschnittes (A) gebildet wird, wobei der Siphonbogen einschließlich Steckmuffe (3) einteilig ausgeführt ist und in die Steckmuffe (3) eine Gummidichtung (4) zur dichten Aufnahme eines ableitenden Rohres einsteckbar ist.

## Claims

1. Mounting block for the connection of sanitary or heating appliances, comprising a foamed-on molded body (6) in which at least one supply pipe (7) and one discharge pipe (8) are foamed in fixed positions, **characterized in that** a siphon bend having an inlet bend section (1) and an outlet bend section (2) is foamed in the molded body (6), wherein the outlet bend section (2) of the siphon bend foamed in the molded body (6) is connected to the discharge pipe (8), and the inlet bend section (1) is provided with a push-in sleeve (3) which has a cut-off section (A) which is arranged in the region of a front side (V) of the foamed-on molded body (6) and projects beyond the front side (V) of the molded body (6) and is formed by a plurality of annular constrictions (5) arranged at a distance from one another in the axial direction in the outer jacket of the plug-in sleeve (3) with a constant inside diameter of the push-in sleeve (3) in the region of the cut-off section (A), wherein the siphon bend including the push-in sleeve (3) is designed in one piece and a rubber seal (4) is insertable into the push-in sleeve (3) for the sealed accommodation of a discharging pipe.

## Revendications

1. Bloc de montage pour le raccordement d'appareils sanitaires ou de chauffage, comprenant un corps moulé (6) enrobé de mousse dans lequel au moins un tuyau d'arrivée (7) et un tuyau d'évacuation (8) sont enrobés de mousse dans des positions définies, **caractérisé en ce qu'**un siphon avec un segment de coude d'arrivée (1) et un segment de coude d'évacuation (2) est enrobé de mousse dans le corps moulé (6), le segment de coude d'évacuation (2) du siphon enrobé de mousse dans le corps moulé (6) est raccordé au tuyau d'évacuation (8) et le segment de coude d'arrivée (1) est muni d'un manchon d'emboîtement (3) qui présente un segment à recouper (A) disposé au niveau d'une face avant (V) du corps moulé (6) enrobé de mousse, qui dépasse au-delà de la face avant (V) du corps moulé (6) et qui est formé par un grand nombre de resserrements annulaires (5) de l'enveloppe extérieure du manchon d'emboîtement (3) disposés à distance les uns des autres dans le sens axial au niveau du segment à recouper (A), avec un diamètre intérieur constant du manchon d'emboîtement (3), le siphon étant réalisé d'une seule pièce, y compris le manchon d'emboîtement (3), et un joint en caoutchouc (4) pouvant être inséré dans le manchon d'emboîtement (3) pour recevoir de façon étanche un tuyau d'évacuation.
